# EUROPEAN PATENT APPLICATION

(11) **EP 4 303 060 A1**
(43) Date of publication of application: **10.01.2024**
(21) Application number: 23182902.9
(22) Date of filing: 30.06.2023
(51) Int. Cl.: B60L 1/00, B60H 1/00, B60H 1/32, B60L 3/00, B60L 3/04

(54) **VOLTAGE DISCHARGE IN REFRIGERATION SYSTEM**

(30) Priority: 05.07.2022 US 202263367674 P
(71) Applicant: Carrier Corporation, Palm Beach Gardens, FL 33418 (US)
(72) Inventor: NIKOU, Milad Pashapour, Syracuse (US); SENF, Ray, Syracuse (US)
(74) Representative: Dehns

(57) **Abstract**

A refrigeration transport system (200) including a power source (512) providing a power flow to a demand component (26, 42, 44, 48), wherein the demand component (26, 42, 44, 48) is operatively coupled to a capacitor; and a controller (30) configured to actively discharge the capacitor when the power flow is interrupted.

## Description

Exemplary embodiments pertain to voltage management and more specifically to voltage management in a transport refrigeration unit.

Refrigerated trailers, containers and vehicles may include a transport refrigeration unit (TRU) to provide proper conditioning for cargo shipped in the trailer. Larger diesel TRU engines may be replaced with efficient smaller engines in a hybrid system architecture or eliminated in an all-electric design. Multiple complementary power sources in hybrid or engineless TRU should therefore be managed to realize design benefits.

For example, a battery powered TRU may possess an onboard rechargeable energy storage system (battery) that can be charged by direct connection to the power supply mains. Such power supply mains may include the Eastern Interconnection electric grid which is part of the Continental United States power transmission grid as well as any grid source or from a distributed generation source on a customer's location site or a delivery location site. The power supply mains may be alternating current (AC), or the power may be direct current (DC) from a detachable or non-detachable source such as a solar grid on site or on a roof of the trailer housing the TRU. The TRU may also execute a power take-off process from the main vehicle engine or from kinetic energy recovered from the vehicle.

A first aspect of the invention provides a refrigeration transport system including a power source providing a power flow to a demand component, wherein the demand component is operatively coupled to a capacitor; and a controller configured to actively discharge the capacitor when the power flow is interrupted.

Active discharge may comprise operating all or part of the demand component.

The capacitor may have a voltage status and the demand component may communicate the voltage status of the capacitor to the controller.

When the voltage status is greater than or equal to 60 volts the controller may be configured to discharge the capacitor by continuing or initiating operation of all or part of the demand component.

The controller may be configured to halt operation of all demand components when the voltage status is <60 V.

When the voltage status is less than 60 volts the controller may be configured to halt operation of the demand component

The refrigeration transport system may include greater than one demand component, each operatively coupled to at least one capacitor and the controller may be configured to have all of the capacitors at a voltage status of less than 60 volts in less than or equal to 5 seconds after halting operation of the refrigeration transport system.

A second aspect of the present invention provides a method of shutting off a transportation refrigeration system including halting a power flow from a power source to a demand component, wherein the demand component is operatively coupled to a capacitor; and after halting the power flow, actively discharging the capacitor by operating all or part of the demand component.

The method may include communicating a capacitor voltage status to a controller and controlling the active discharge to achieve a capacitor voltage status less than or equal to 60 volts in less than or equal to five seconds.

The following descriptions should not be considered limiting in any way. With reference to the accompanying drawings, like elements are numbered alike:
FIG. 1 is an illustration of components according to an embodiment;
FIG. 2 is an enlarged illustration of components according to an embodiment; and
FIG. 3 is a flowchart of a method of shutting down a refrigeration transport system.

A detailed description of one or more embodiments of the disclosed apparatus and method are presented herein by way of exemplification and not limitation with reference to the Figures.

Transportation refrigeration units, which include trailers, shipping containers, trucks, vans and cargo containers, can be powered by a variety of sources such as a rechargeable energy storage device, power from a power grid provided by an electrical utility, fuel cells, solar power, wind power, an onboard generator, a stationary generator, a regenerative generator, an internal combustion engine, and combinations thereof. Transportation refrigeration units may have voltages greater than or equal to 60 volts of direct current (VDC). Voltage discharge at these levels may have undesirable effects on humans. In order to provide a safe environment to perform service or inspection the voltage may be discharged to a lower level, typically to below 60 volts. Many demand components in the transportation refrigeration unit are operably coupled with a capacitor in order to provide a steady flow of electricity to the demand component. When operation of the transportation refrigeration unit is stopped, an undesirable level of voltage may remain in one or more capacitors. In some situations, it is advantageous for the system wide voltage to be less than 60 volts within 5 seconds of shut down. Approaches to similar issues in the past have included a dedicated discharge system such as one or more resistors to generate heat and discharge the capacitor(s). The presence of additional components such as the resistors adds weight and complexity to the system as well as introducing heat which may be undesirable in a refrigeration system. Described herein is a transportation refrigeration system configured to use the existing demand components to actively discharge voltage stored in the capacitors.

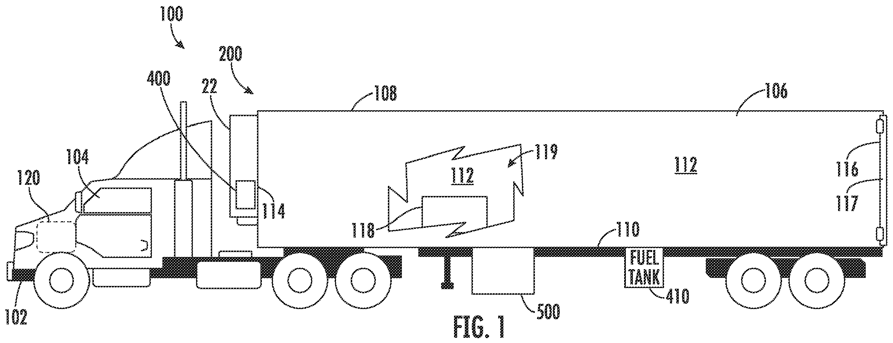

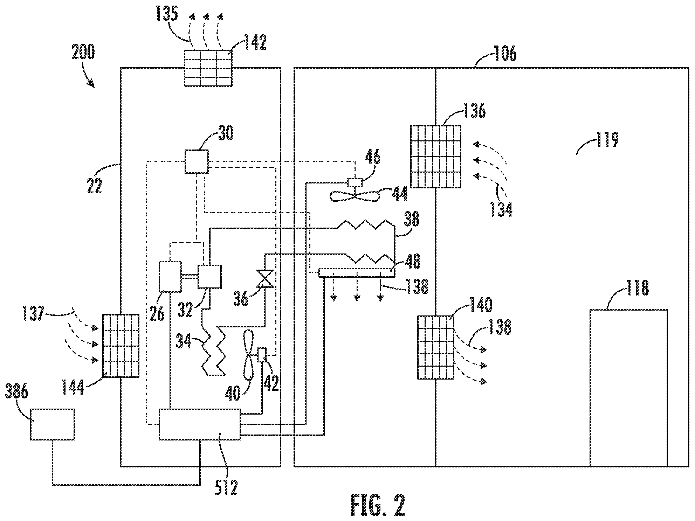

Referring to FIGS. 1 and 2, various embodiments are illustrated. FIG. 1 shows a schematic illustration of a transport refrigeration system 200. FIG. 2 shows an enlarged schematic illustration of the transport refrigeration system 200 of FIG. 1.

The transport refrigeration system 200 is being illustrated as a trailer system 100, as seen in FIG. 1. It should be understood that the transport refrigeration system as a trailer system is exemplary only and should not be construed as limiting. The trailer system 100 includes a vehicle 102 coupled to a transport container 106. The vehicle 102 may include an operator's compartment or cab 104 and a propulsion motor 120. The propulsion motor 120 is configured to power the vehicle 102. The energy source that powers the propulsion motor 120 may be at least one of compressed natural gas, liquefied natural gas, gasoline, electricity, diesel, hydrogen, electricity from a fuel cell, electricity from a hydrogen fueled proton exchange membrane (PEM) fuel cell, electricity from a battery, electricity from a generator, or any combination thereof. The propulsion motor 120 may be an electric motor or a hybrid motor (e.g., a combustion engine and an electric motor). The transport container 106 may be removably coupled to the vehicle 102. The transport container 106 is a refrigerated trailer and includes a top wall 108, a directly opposed bottom wall 110, opposed side walls 112, and a front wall 114, with the front wall 114 being closest to the vehicle 102. The transport container 106 further includes a door or doors 117 at a rear wall 116, opposite the front wall 114. Alternatively, a door or doors 117 may be located on one or more side walls 112. It is further contemplated that the door or doors 117 may be located on a combination of side wall(s) 112 and rear wall 116. The walls of the transport container 106 define a refrigerated cargo space 119. The refrigerated cargo space 119 may comprise multiple compartments which may have different desired conditions such as different temperatures. For simplicity, a single refrigerated cargo space 119 is referred to herein. It is appreciated by those of skill in the art that embodiments described herein may be applied to a tractor-trailer refrigerated system or non-trailer refrigeration such as, for example a rigid truck, a truck having a refrigerated compartment, or a shipping container having a refrigerated compartment.

Typically, transport refrigeration systems 200 are used to transport and distribute perishable goods and environmentally sensitive goods (herein referred to as perishable goods 118). The perishable goods 118 may include but are not limited to fruits, vegetables, grains, beans, nuts, eggs, dairy, seed, flowers, meat, poultry, fish, ice, blood, pharmaceuticals, or any other suitable cargo requiring temperature controlled transport. The transport refrigeration system 200 includes a transport refrigeration unit 22, a refrigerant compression device 32, an electric motor 26 for driving the refrigerant compression device 32, and a controller 30. While shown as a single controller, the controller 30 may comprise one or more sub controllers (not shown) which are coordinated to control elements of the transport refrigeration system 200. The transport refrigeration unit 22 is in operative association with the refrigerated cargo space 119 and is configured to provide conditioned air to the transport container 106. The transport refrigeration unit 22 functions, under the control of the controller 30, to establish and regulate desired environmental parameters, such as, for example temperature, pressure, humidity, carbon dioxide, ethylene, ozone, light exposure, vibration exposure, and other conditions in the refrigerated cargo space 119, as known to one of ordinary skill in the art. In an embodiment, the transport refrigeration unit 22 is capable of providing a desired temperature, carbon dioxide, and humidity range.

The transport refrigeration unit 22 includes a refrigerant compression device 32, a refrigerant heat rejection heat exchanger (also referred to as a condenser) 34, an expansion device 36, and a refrigerant heat absorption heat exchanger (also referred to as an evaporator) 38 connected in refrigerant flow communication in a closed loop refrigerant circuit and arranged in a conventional refrigeration cycle. The transport refrigeration unit 22 also includes one or more fans 40 associated with the refrigerant heat rejection heat exchanger 34 and driven by fan motor(s) 42 and one or more fans 44 associated with the refrigerant heat absorption heat exchanger 38 and driven by fan motor(s) 46. The transport refrigeration unit 22 may also include a heater 48 associated with the refrigerant heat absorption heat exchanger 38. The heater may be an electric resistance heater. It is to be understood that other components (not shown) may be incorporated into the refrigerant circuit as desired, including for example, but not limited to, a suction modulation valve, a receiver, a filter/dryer, a sub cooler, and an economizer circuit.

The refrigerant heat rejection heat exchanger 34 may, for example, comprise one or more refrigerant conveying coiled tubes or one or more tube banks formed of a plurality of refrigerant conveying tubes across flow path to the heat outlet 142. The fan(s) 40 are operative to pass air, typically ambient air, across the tubes of the refrigerant heat rejection heat exchanger 34 to cool refrigerant vapor passing through the tubes. The refrigerant heat rejection heat exchanger 34 may operate either as a refrigerant condenser, such as if the transport refrigeration unit 22 is operating in a subcritical refrigerant cycle or as a refrigerant gas cooler, such as if the transport refrigeration unit 22 is operating in a transcritical cycle. A sub cooler, when present, receives refrigerant from the refrigerant heat rejection heat exchanger.

The refrigerant heat absorption heat exchanger 38 may, for example, also comprise one or more refrigerant conveying coiled tubes or one or more tube banks formed of a plurality of refrigerant conveying tubes extending across flow path from a return air intake 136. The fan(s) 44 are operative to pass air drawn from the refrigerated cargo space 119 across the tubes of the refrigerant heat absorption heat exchanger 38 to heat and evaporate refrigerant liquid passing through the tubes and cool the air. The air cooled in traversing the refrigerant heat absorption heat exchanger 38 is supplied back to the refrigerated cargo space 119 through a refrigeration unit outlet 140. It is to be understood that the term "air" when used herein with reference to the atmosphere within the cargo box includes mixtures of air with other gases, such as for example, but not limited to, nitrogen or carbon dioxide, sometimes introduced into a refrigerated cargo box for transport of perishable produce.

Airflow is circulated into and through the refrigerated cargo space 119 of the transport container 106 by means of the transport refrigeration unit 22. A return airflow 134 flows into the transport refrigeration unit 22 from the refrigerated cargo space 119 through the refrigeration unit return air intake 136, and across the refrigerant heat absorption heat exchanger 38 via the fan 44, thus conditioning the return airflow 134 to a selected or predetermined temperature. The conditioned return airflow 134, now referred to as supply airflow 138, is supplied into the refrigerated cargo space 119 of the transport container 106 through the refrigeration unit outlet 140.

Heat 135 is removed from the refrigerant heat rejection heat exchanger 34 through the heat outlet 142. The transport refrigeration unit 22 may contain an external air inlet 144, as shown in FIG. 2, to aid in the removal of heat 135 from the refrigerant heat rejection heat exchanger 34 by pulling in external air 137. The supply airflow 138 may cool the perishable goods 118 in the refrigerated cargo space 119 of the transport container 106.

It is to be appreciated that the transport refrigeration unit 22 can further be operated in reverse to warm the transport container 106 when, for example, the outside temperature is very low. In the illustrated embodiment, the return air intake 136, the refrigeration unit outlet 140, the heat outlet 142, and the external air inlet 144 are configured as grills to help prevent foreign objects from entering the transport refrigeration unit 22.

The transport refrigeration system 200 also includes a controller 30 configured for controlling the operation of the transport refrigeration system 200 including, but not limited to, the operation of various components of the refrigerant unit 22 to provide and maintain a desired thermal environment within the refrigerated cargo space 119. The controller 30 may also be able to selectively operate the electric motor 26. As mentioned above, controller 30 may comprises one or more sub controllers.

The controller 30 may be an electronic controller including a processor and an associated memory comprising computer-executable instructions that, when executed by the processor, cause the processor to perform various operations. The processor may be but is not limited to a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be a storage device such as, for example, a random access memory (RAM), read only memory (ROM), or other electronic, optical, magnetic or any other computer readable medium. The controller 30 may have multiple inputs (e.g., analog, digital, others) and multiple outputs and a communication interface (e.g., CAN-bus, ethernet).

As discussed above the transportation refrigeration system includes a plurality of components, including a plurality of power source components and a plurality of power demand components. The power source components may include an energy storage device 512. Exemplary energy storage devices include one or more batteries which can be recharged using charging station 386 or may be recharged by other means such as a fuel cell or solar panels or regenerative power source such as an axle generator (not shown). The plurality of power demand components may include electric motors such as the motor 26 for the refrigerant compression device, fans such as 42 and 44, resistance heater 48, energy storage device thermal management system (not shown), or any other component which draws electricity from the energy storage device.

The plurality of power source components and power demand may be dynamically controlled by a controller 30. The controller may be a separate component as shown in FIG 2 or may be integrated with one or more of the system components.

Many energy storage devices such as batteries are high voltage (greater than 60 volts) and supply power to the power demand components. In order to have a consistent supply of power, many or all of the power demand components are operably coupled with a capacitor which may store voltage greater than 60 volts. When operation of the transportation refrigeration unit is stopped, an undesirable voltage may remain in one or more capacitors. In order to drain the voltage from the one or more capacitors the controller may direct the associated power demand component to an "on" state for a length of time sufficient to reduce the voltage in the capacitor to less than 60 volts. Typical amounts of time are less than or equal to 5 seconds, or, less than or equal to 1 second. In some embodiments, after operation of the transportation refrigeration unit has stopped, a power demand component may notify the controller regarding the voltage contained in the associated capacitor (the voltage status). In the event that the capacitor voltage exceeds or equals 60 volts, the controller directs the power demand component to either initiate or continue operation in order to actively drain the voltage from the capacitor below 60 volts. In the event that the capacitor has a voltage status less than 60 volts without further operation of the power demand component, the controller may direct the power demand component to shut down. It is further contemplated that the controller may direct some or all power demand components operably coupled to a capacitor to remain "on" for a time sufficient to drain the associated capacitors, thus avoiding an issue of failing to detect voltage in the capacitor.

In some situations, it is advantageous to reduce the voltage stored in a capacitor to less than 60 volts in less than or equal to 7 seconds after halting operation, or in less than 5 minutes after halting operation.

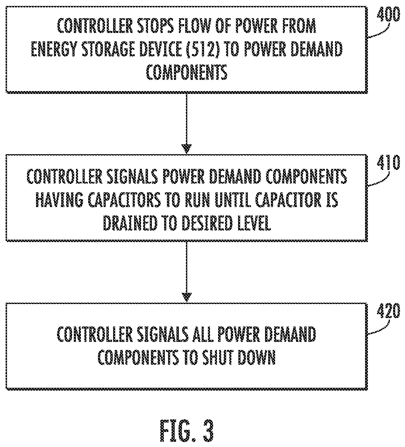

Referring now to FIG. 3, a method of halting operation of a transportation refrigeration system is shown. Box 400 shows the initiation of the system shut down by the controller 30, halting the flow of power from the energy storage device to the power demand components. Box 410 shows the controller 30 signaling the power demand components having a capacitor to run until the capacitor is drained to a desired level. The desired level may be less than 60 volts, or, less than 50 volts, or, less than 20 volts, or, less than 5 volts. The desired level may be zero volts although some components may cease to operate before the capacitor reaches a level of zero volts. As shown in box 410, once the desired voltage level is attained in the capacitors, the controller signals the power demand components to shut down. It is acknowledged that when the flow of current is stopped the power demand component may stop functioning. This is different than being "off" or "shut down" because in the event of a return of current flow the power demand component would return to function without being turned "on" by the controller. When the controller signals a power demand component to turn "off' or "shut down" the power demand component will not return to operation without a signal from the controller to turn "on".

The term "about" is intended to include the degree of error associated with measurement of the particular quantity based upon the equipment available at the time of filing the application. The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made without departing from the scope of the present invention. In addition, many modifications may be made to adapt a particular situation or material to the teachings of the present invention without departing from the essential scope thereof. Therefore, it is intended that the present invention not be limited to the particular embodiment disclosed as the best mode contemplated for carrying out this present invention, but that the present invention will include all embodiments falling within the scope of the claims.

## Claims

1. A refrigeration transport system (200) comprising:
a power source (512) providing a power flow to a demand component (26, 42, 44, 48), wherein the demand component (26, 42, 44, 48) is operatively coupled to a capacitor; and
a controller (30) configured to actively discharge the capacitor when the power flow is interrupted.

2. The refrigeration transport system (200) of claim 1, wherein active discharge comprises operating all or part of the demand component (26, 42, 44, 48).

3. The refrigeration transport system (200) of claim 1 or 2, wherein the capacitor has a voltage status and the demand component (26, 42, 44, 48) communicates the voltage status of the capacitor to the controller (30).

4. The refrigeration transport system (200) of claim 3, wherein when the voltage status is greater than or equal to 60 volts the controller (30) is configured to discharge the capacitor by continuing or initiating operation of all or part of the demand component (26, 42, 44, 48).

5. The refrigeration transport system (200) of claim 3 or 4, wherein the controller (30) is configured to halt operation of all demand components (26, 42, 44, 48) when the voltage status is <60 V.

6. The refrigeration transport system (200) of claim 3 or 4, wherein when the voltage status is less than 60 volts the controller (30) is configured to halt operation of the demand component (26, 42, 44, 48).

7. The refrigeration transport system (200) of any preceding claim comprising greater than one demand component (26, 42, 44, 48), each operatively coupled to at least one capacitor and the controller (30) is configured to have all of the capacitors at a voltage status of less than 60 volts in less than or equal to 5 seconds after halting operation of the refrigeration transport system.

8. A method of shutting off a transportation refrigeration system (200) comprising:
halting a power flow from a power source (512) to a demand component (26, 42, 44, 48), wherein the demand component (26, 42, 44, 48) is operatively coupled to a capacitor; and
after halting the power flow, actively discharging the capacitor by operating all or part of the demand component (26, 42, 44, 48).

9. The method of claim 8, further comprising communicating a capacitor voltage status to a controller (30) and controlling the active discharge to achieve a capacitor voltage status less than or equal to 60 volts in less than or equal to five seconds.
